# EUROPEAN PATENT APPLICATION

(11) **EP 4 593 174 A2**
(43) Date of publication of application: **30.07.2025**
(21) Application number: 24219221.9
(22) Date of filing: 11.12.2024
(51) Int. Cl.: H01M 50/152, H01M 50/528, H01M 50/559, H01M 50/636

(54) **SECONDARY BATTERY**

(30) Priority: 29.01.2024 KR 20240013085
(71) Applicant: SAMSUNG SDI CO., LTD., Yongin-si, Gyeonggi-do 17084 (KR)
(72) Inventor: JUNG, Hyun Ki, 17084 Yongin-si (KR)
(74) Representative: Marks & Clerk LLP

(57) **Abstract**

A secondary battery includes: an electrode assembly including a first electrode plate, a separator, and a second electrode plate; a can accommodating the electrode assembly, a lower end of the can being open and being electrical connected to the second electrode plate; a first current collector plate between a top surface of the electrode assembly and the can and electrically connected to the first electrode plate; and a terminal part passing through a top surface of the can, a lower end of the terminal part being electrically and mechanically coupled to a top surface of the first current collector plate. A terminal liquid injection hole, through which an electrolyte is injected, extends through the terminal part.

## Description

### BACKGROUND

### 1. Field

Aspects of embodiments of the present disclosure relate to a secondary battery.

### 2. Description of the Related Art

A cylindrical secondary battery generally includes a cylindrical electrode assembly, a cylindrical can accommodating the electrode assembly and an electrolyte, and a cap assembly coupled to an open at a side of the can to seal the can and which is electrically connected to the electrode assembly to electrically connect an external device to the electrode assembly.

In a battery module including a plurality of secondary batteries that are connected to each other, busbars are connected to upper and lower portions (e.g., upper and lower ends) of the secondary batteries, respectively, a connection and housing structure is complicated and a process time increases.

To mitigate these concerns, a can may have a terminal hole at each of one open side and an opposite side, and a positive electrode rivet terminal and the can are coupled to be insulated from each other inside the terminal hole. When this battery configuration is used, busbars are provided on the same surface of the secondary battery to more easily facilitate the connection of the busbar in the secondary battery module.

However, welding is generally used to connect a rivet terminal to a current collector plate of the electrode assembly in a core of the electrode assembly, and thus, metal foreign substances, such as fume or spatter, may be generated inside the battery. As a result, an additional dust collection operation to remove the metal foreign substances, if present, is often performed. In addition, the electrode assembly may be damaged due to welding heat.

In addition, an electrolyte is injected through a cap plate-side liquid injection port. A sealing point may be changed during the injection due to welding of a wing part of a negative electrode current collector plate, and the remaining electrolyte may increase due to an increase in injection amount and area of a beading part, which may cause residual electrolyte on the beading part and the winding part of the negative electrode current collector plate.

The above-described information disclosed in the Background section provides the background of the present disclosure and is for improving understanding of the background of the present disclosure and, thus, may include information that does not constitute the related (or prior) art.

### SUMMARY

Embodiments of the present disclosure provide a secondary battery having an improved terminal and liquid injection structure.

According to an embodiment of the present disclosure, a secondary battery includes: an electrode assembly including a first electrode plate, a separator, and a second electrode plate; a can accommodating the electrode assembly, a lower end of the can being open and being electrical connected to the second electrode plate; a first current collector plate between a top surface of the electrode assembly and the can and electrically connected to the first electrode plate; and a terminal part passing through a top surface of the can, a lower end of the terminal part being electrically and mechanically coupled to a top surface of the first current collector plate. A terminal liquid injection hole. through which an electrolyte is injected. extends through the terminal part.

The terminal part may include: a rivet terminal coupled to the top surface of the can; and an insulator between the can and the rivet terminal to insulate the can and the rivet terminal from each other.

The can may have: the top surface having a flat plate shape and a terminal hole passing through a central portion thereof; and a side surface extending downwardly from an edge of the top surface. The rivet terminal may be in the terminal hole.

The rivet terminal may include: a head outside the top surface of the can; and a main body inserted into the terminal hole and inside the can.

A planar size of the head may be larger than a planar size of the main body.

The main body may have: a main body upper portion connected to the head and within the terminal hole in the top surface of the can; and a main body lower portion extending downwardly from the main body upper portion and inside the can.

The main body lower portion may have an outer diameter that is greater than an outer diameter of the main body upper portion.

The terminal liquid injection hole may be in the main body of the rivet terminal.

The first current collector plate may have an injection hole into which the electrolyte is injected, and the injection hole in the first current collector plate may correspond to a position of the terminal hole in the rivet terminal.

The terminal liquid injection hole may have an inner diameter equal to an inner diameter of the injection hole in the first current collector plate.

The rivet terminal may have a welding groove having a depth in a downward direction from a top surface thereof.

The first current collector plate may be welded to an outside of the rivet terminal through the welding groove in a state in which the top surface of the first current collector plate is in contact with a bottom surface of the main body so that a welding bead is inside the welding groove.

The welding groove may pass through a central portion of the head to extend downwardly from an upper portion of the main body.

The welding groove may have an upper inner diameter that is greater than a lower inner diameter thereof.

The terminal liquid injection hole may extend from a bottom surface of the welding groove to a bottom surface of the main body.

The terminal liquid injection hole may have an inner diameter that is less than a lower inner diameter of the welding groove.

The first current collector plate may be welded outside the rivet terminal through the welding groove in a state in which a top surface of the first current collector plate is in contact with a bottom surface of the main body so that a welding bead is in the welding groove.

The terminal part may have a terminal flat part on a top surface of the rivet terminal to cover the top surface of the rivet terminal.

The terminal flat part may have a planar size that is less than a planar size of the head of the rivet terminal.

The terminal flat part may have a stepped portion on an upper edge thereof.

The rivet terminal may be welded to the stepped portion on the edge of the terminal flat part in a state in which the top surface of the rivet terminal is in contact with a bottom surface of the terminal flat part so that a welding bead is on the stepped portion along a circumference of the rivet terminal.

A welding area of the terminal flat part may have a diameter that is less than an outer diameter of the head of the rivet terminal.

The terminal flat part may have a protrusion protruding in a direction toward the welding groove in the rivet terminal and is coupled to the welding groove in the rivet terminal.

The protrusion of the terminal flat part may have a tapered shape having an outer diameter that gradually decreases in the protruding direction.

The protrusion of the terminal flat part may correspond to a shape of the welding groove.

The protrusion of the terminal flat part may partially fill the welding groove.

The protrusion of the terminal flat part may have the same shape as the welding groove to be in close contact with the welding groove.

The protrusion of the terminal flat part may include an additional protrusion protruding in a direction toward the terminal liquid injection hole and is coupled to the terminal liquid injection hole.

The additional protrusion of the terminal flat part may have an outer diameter corresponding to an inner diameter of the terminal liquid injection hole.

The additional protrusion of the terminal flat part may have an outer diameter that is equal to an inner diameter of the terminal liquid injection hole to be in close contact with the terminal liquid injection hole.

The insulator may include: a first insulator between an outer end of the rivet terminal and the top surface of the can; a second insulator at a side of the terminal hole in the top surface and extending around a periphery of the terminal hole; and a third insulator between an inner surface of the top surface and an inner end of the rivet terminal.

An end of the first insulator may protrude beyond the head.

The first insulator may have a planar size that is greater than that of the head.

The third insulator may have a planar size that is greater than that of the first current collector plate.

The third insulator may cover an inner surface of the top surface of the can.

A positive electrode non-coating portion that is not coated with a positive electrode active material may protrude upwardly from the first electrode plate, and a negative electrode non-coating portion that is not coated with a negative electrode active material may protrude downwardly from the second electrode plate.

The secondary battery may further include a second current collector plate. The can may have: the top surface having a flat plate shape and a terminal hole passing through a central portion thereof; and a side surface extending downwardly from an edge of the top surface. The second current collector plate may be adjacent to an end of the side surface and electrically connected to the second electrode plate and the side surface.

The secondary battery may further include a cap plate coupled to the side surface to seal a lower end of the can and being insulated from the side surface.

The side surface may have: a beading part including an inwardly concave portion of the side surface; and a crimping part including an inwardly bent lower end of the side surface. The cap plate may be between the beading part and the crimping part.

The secondary battery may further include a gasket between the cap plate and the side surface.

The second current collector plate may be between the beading part and the gasket and in contact with the beading part.

The rivet terminal, the first current collector plate, and the terminal flat part may be made of the same material.

At least some of the above and other features of the invention are set out in the claims.

### BRIEF DESCRIPTION OF THE DRAWINGS

The following drawings attached to this specification illustrate embodiments of the present disclosure and further describe aspects and features of the present disclosure together with the detailed description of the present disclosure. Thus, the present disclosure should not be construed as being limited to the drawings, in which:
FIG. 1 is a perspective view of a secondary battery according to various embodiments of the present disclosure;
FIG. 2 is a cross-sectional view of the secondary battery shown in FIG. 1;
FIG. 3 is an enlarged cross-sectional view of the portion 3 in FIG. 2; and
FIGS. 4 to 6 are enlarged cross-sectional views of the portion 3 in FIG. 2 according to other embodiments of the present disclosure.

### DETAILED DESCRIPTION OF THE DRAWINGS

Hereinafter, embodiments of the present disclosure will be described, in detail, with reference to the accompanying drawings.

Embodiments of the present disclosure may, however, be embodied in many different forms and should not be construed as being limited to the embodiments set forth herein; rather, these embodiments are provided so that this disclosure will be thorough and complete and will fully convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

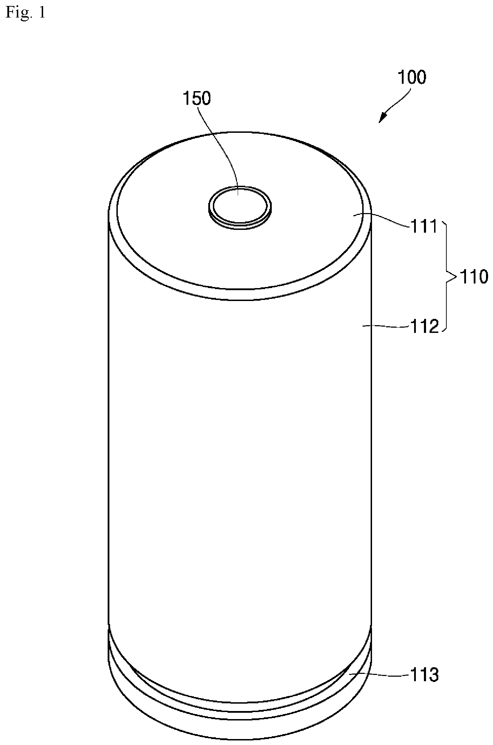

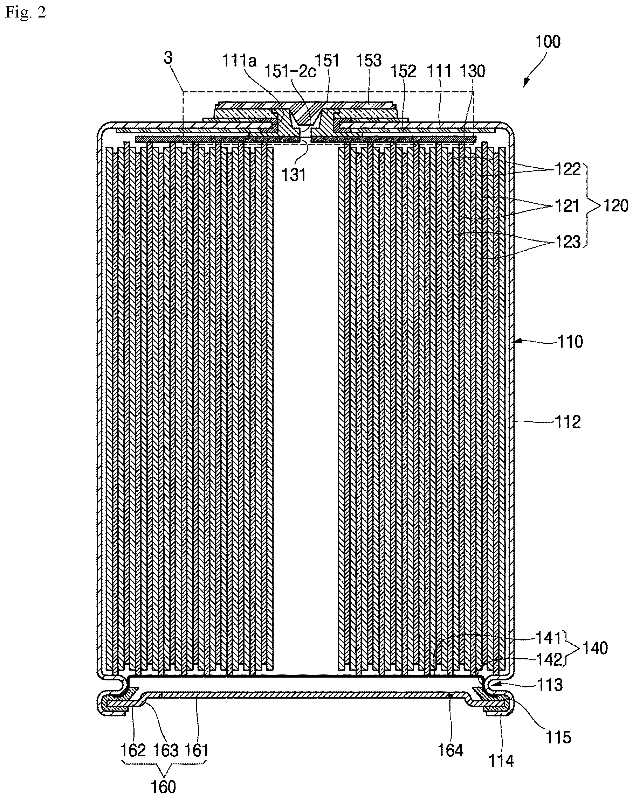

FIG. 1 is a perspective view of a secondary battery 100 according to various embodiments of the present disclosure, and FIG. 2 is a cross-sectional view of the secondary battery 100 shown in FIG. 1. In more detail, FIG. 2 is a cross-sectional view taken along a longitudinal direction of the secondary battery 100 shown in FIG. 1.

As illustrated in FIGS. 1 and 2, a secondary battery 100, according to embodiments of the present disclosure, may include a can 110, an electrode assembly 120 accommodated in the can 110, a terminal part 150 coupled to a terminal hole (e.g., a terminal opening) in one end of the can 110, and a cap plate 160 that seals an opening in the other end (e.g., in the opposite end) of the can 110.

The can 110 may have a circular top surface part 111 and a side surface part 112 extending by a length (e.g., a predetermined length) downwardly from an edge of (e.g., from a periphery of) the top surface part 111. The top surface part 111 and the side surface part 112 of the can 110 may be integrated with (e.g., may be integrally formed with) each other. In some embodiments, a portion (or area) between the top surface part 111 and the side surface part 112 may be bent to have a rounded shape. Because a lower portion of the side surface part 112 is open, the can 110 may have a cylindrical shape with an open lower end.

The circular top surface part 111 may have a flat circular plate shape and may have a terminal hole (e.g., a terminal opening) 111a passing through a central portion thereof. The terminal part 150 may be coupled to the top surface part 111 by being inserted into the terminal hole 111a. A portion of the terminal part 150 may be exposed to the outside of the top surface part 111 through the terminal hole 111a.

An upper end of the side surface part 112 may be integrated with the top surface part 111. A lower end of the side surface part 112 may be open, and a cap plate 160 may be provided at (e.g., may be coupled to the side surface part 112 at) the open end. A beading part (e.g., a bead) 113 may be disposed on (e.g., may be formed in) the side surface part 112 of the can 110 adjacent to the lower end. The beading part 113 may be provided to be concave inwardly from the side surface part 112. An end spaced apart from the beading part 113 may be bent toward the inside of the can 110 to provide (e.g., to form) a crimping part 114. The beading part 113 may prevent the electrode assembly 200 from being separated from the can 110. A cap plate 160 may be disposed between (e.g., may be fixed or held between) the beading part 113 and the crimping part 114. The crimping part 114 may fix the cap plate 160 to seal the can 110.

The can 110 may be made of steel, a steel alloy, aluminum, an aluminum alloy, or an equivalent thereof, but the material of the can 110 is not limited thereto.

During a process of manufacturing the secondary battery 100, a lower portion of the can 110 may be open. In some embodiments, during the process of manufacturing the secondary battery 100, the electrode assembly 120 may be inserted through the open lower portion of the can 110 together with the electrolyte. In some embodiments, the electrolyte and the electrode assembly 120 may be inserted into the can 110 in a state in which the open lower portion faces an upper side (e.g., faces upwardly with respect to gravity). After the electrolyte and the electrode assembly 120 are inserted into the can 110, the cap plate 160 may be coupled to the open lower end of the can 110 to seal the inside of the can 110. In some embodiments, the electrolyte may enable movement of lithium ions between a first electrode plate 121 and a second electrode plate 122 of the electrode assembly 120. The electrolyte may be a nonaqueous organic electrolyte that is a mixture of a lithium salt and a high-purity organic solvent. The electrolyte may be a polymer electrolyte using (or including) a polymer or a solid electrolyte, but the type of the electrolyte is not limited here.

After the electrode assembly 120 is inserted through the open lower end of the can 110, the beading part 113 may be provided (e.g., may be formed) in the can 110 to prevent the electrode assembly 120 from being separated from the can 110.

As illustrated in FIG. 2, the electrode assembly 120 may include the first electrode plate 121, the second electrode plate 122, and a separator 123. The first electrode plate 121 may be a positive electrode plate, and the second electrode plate 122 may be a negative electrode plate, but the opposite is also possible. Hereinafter, for convenience of description, the first electrode plate 121 will be referred to as the positive electrode plate, and the second electrode plate 122 will be referred to as the negative electrode plate.

In the first electrode plate 121, at least one surface of plate-shaped metal foil made of aluminum (Al) has at least one surface coated with a positive electrode active material made of a transition metal oxide. In some embodiments, the first electrode plate 121 may have a positive electrode non-coating portion, which is an area of the metal foil that is not coated with the positive electrode active material at an upper end thereof. The positive electrode non-coating portion may protrude toward (or may protrude from or above) an upper side of the electrode assembly 120. In some embodiments, the positive electrode non-coating portion of the first electrode plate 121 may protrude further upwardly than (e.g., may protrude upwardly beyond) the second electrode plate 122 and the separator 123.

The second electrode plate 122 may be a plate-shaped metal foil made of copper (Cu) or nickel (Ni) having at least one surface coated with a negative electrode active material, such as graphite or carbon. In some embodiments, the second electrode plate 122 may have a negative electrode non-coating portion, which is an area of the metal foil that is not coated with the negative electrode active material at a lower end thereof. The negative electrode non-coating portion may protrude toward (or may protrude from or below) a lower side of the electrode assembly 120. In some embodiments, the negative electrode non-coating portion of the second electrode plate 122 may protrude further downwardly than (e.g., may protrude downwardly beyond) the first electrode plate 121 and the separator 123.

The separator 123 may be made of polyethylene (PE) or polypropylene (PP), but the present disclosure is not limited thereto. The separator 123 may be disposed between the first electrode plate 121 and the second electrode plate 122 to prevent a short circuit therebetween but allows for movement of lithium ions therebetween.

The electrode assembly 120 may be wound from a winding front end to have a substantially cylindrical shape after the first electrode plate 121, the second electrode plate 122, and the separator 123 are stacked. In some embodiments, in the electrode assembly 120, the positive electrode non-coating portion that is not coated with the positive electrode active material may protrude upwardly from the first electrode plate 121, and the negative electrode non-coating portion that is not coated with the negative electrode active material may protrude downwardly from the second electrode plate 122. In some embodiments, the electrode assembly 120 may be provided (e.g., may be formed or configured) so that the outermost positive electrode non-coating portion may not protrude upwardly, and the outermost negative electrode non-coating portion may not protrude downwardly. In some embodiments, the electrode assembly 120 may have a stepped portion where the outermost side of each of the upper and lower portions is recessed further than other areas.

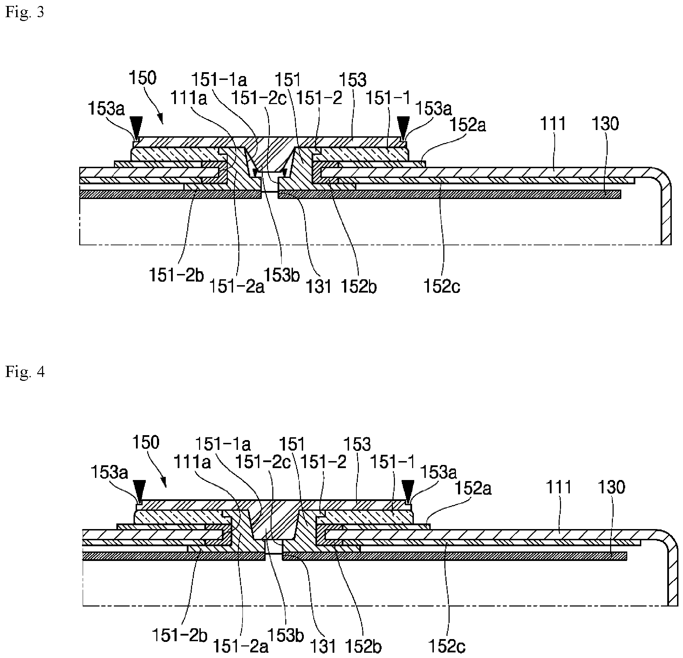

A first current collector plate 130 may be a circular metal plate having a shape corresponding to a top surface of the electrode assembly 120. A planar size of the first current collector plate 130 may be equal to or less than a size of the top surface of the electrode assembly 120. The first current collector plate 130 may be made of aluminum (Al). The first current collector plate 130 may be fixed and electrically connected to the first electrode plate 121 exposed at (or from) the upper side of the electrode assembly 120 through welding in a state in which a bottom surface of the first current collector plate 130 is in contact with the top surface of the electrode assembly 120. The first current collector plate 130 may be fixed and electrically connected to the terminal part 150 by welding in a state in which the top surface of the first current collector plate 130 is in contact with the bottom surface of the terminal part 150. The first current collector plate 130 may act as a path for the current flow between the first electrode plate 121 of the electrode assembly 120 and the terminal part 150. The first current collector plate 130 may be welded to the electrode assembly 120 and may be accommodated in the can 110 and then welded to the terminal part 150. The first current collector plate 130 may have a thickness less than that of a lower main body 151-2b of the terminal part 150 (see, e.g., FIG. 3), to be described below, to improve weldability.

The second current collector plate 140 may include a circular planar part 141 corresponding to the bottom surface of the electrode assembly 120 and an extension part 142 extending downwardly from an edge of (e.g., from a periphery of) the planar part 141. A top surface of the planar part 141 may be in contact with the bottom surface of the electrode assembly 120. The top surface of the planar part 141 may be fixed and electrically connected to the second electrode plate 122 exposed to the lower side of the electrode assembly 120 by welding in a state of being in contact with the bottom surface of the electrode assembly 120.

The extension part 142 may extend downwardly from the edge of the planar part 141. For example, the extension part 142 may be provided in plurality with each being spaced apart from each other along the edge of (e.g., around) the planar part 141. For example, the second current collector plate 140 may include four extension parts 142 arranged symmetrical to each other about the planar part 141, but the present disclosure is not limited thereto. The extension part 142 may be bent to extend downwardly from the edge of the planar part 141. In some embodiments, the extension portion 142 may be in contact with an inner surface of the beading part 113. In some embodiments, the extension portion 142 may be rounded or bent along (e.g., may extend along and correspond to) the beading part 113. In some embodiments, the inner surface of the beading part 113 may be an inner surface of the can 110. The end of the extension part 142 may be disposed between the beading part 113 and a gasket 115. The extension part 142 may be in contact with and may be coupled to the beading part 113 of the can 110. In some embodiments, the extension part 142 may be coupled by welding in a state of being in contact with an inner surface of the beading part 113 of the can 110. The second current collector plate 140 may act as a path for the current flow between the second electrode plate 122 of the electrode assembly 120 and the can 110. In some embodiments, the can 110 may be (or may act as) a negative electrode terminal.

FIG. 3 is an enlarged cross-sectional view of the portion 3 in FIG. 2; and FIGS. 4 to 6 are enlarged cross-sectional views of the portion 3 in FIG. 2 according to other embodiments of the present disclosure. As illustrated in FIGS. 3 to 6, the terminal part 150 may include a rivet terminal 151 and a plurality of insulators 152 for insulating the rivet terminal 151.

The rivet terminal 151 may be inserted into the terminal hole 111a in the top surface part 111 of the can 110 and electrically connected to a first current collector plate 130. The rivet terminal 151 may be electrically connected to the first electrode plate 121 of the electrode assembly 120 through the first current collector plate 130. That is, the rivet terminal 151 may be (or may act as) a positive electrode terminal. The rivet terminal 151 and the can 110 may have different polarities. The rivet terminal 151 may be made of the same or similar material as each of the first current collector plate 130 and the first electrode plate 121. Each of a diameter of a portion of the rivet terminal 151, which is exposed at an upper side of the can 110, and a diameter of a portion of the rivet terminal 151, which is disposed on a bottom surface (e.g., a bottom surface of the top surface part 111) inside the can 110, may be greater than that of the rivet terminal 151, which is disposed in the terminal hole 111a. That is, the rivet terminal 151 may be a terminal coupled to the top surface part 111 of the can 110 by a riveting method. The rivet terminal 151 may be inserted into the terminal hole 111a from the outside of the can 110 toward the inside of the can 110. In some embodiments, one end of the rivet terminal 151 may be disposed outside the can 110, and the other end may be disposed inside the can 110.

One end of the rivet terminal 151 may have a hollow disc shape, may be exposed at an upper side of the can 110, and may be referred to as a head 151-1. The other end of the rivet terminal 151 may have a hollow cylindrical shape and may be referred to as a main body 151-2 extending from the head 151-1 toward the inside of the can 110. The cylindrical main body 151-2 may be deformed into a substantially disk shape by being pressed by a mechanism. The upper end of the main body 151-2 of the rivet terminal 151 may be connected to the side surface of the head 151-1, and the main body 151-2 and the head 151-1 may be integrated with (e.g., may be integrally formed with) each other. A lower portion of the main body 151-2 may be compressively deformed (e.g., may be compression molded) by riveting, and the terminal hole 111a may be sealed by pressing an insulator 152. In some embodiments, the main body 151-2 may have a diameter that gradually increases from the terminal hole 111a toward the inside of the can 110. The main body 151-2 may have an upper main body 151-2a disposed within the terminal hole 111a of the can 110 and a lower main body 151-2b disposed inside the can 110. A diameter (e.g., outer diameter) of the lower main body 151-2b may be greater than that of the upper main body 151-2a. That is, the lower main body 151-2b may overlap the can 110 on a plane.

Before the rivet terminal 151 is coupled, the insulator 152 may be inserted between the head 151-1 and the top surface part 111 of the can 110 to insulate the can 110 from the rivet terminal 151. With the rivet terminal 151 inserted into the terminal hole 111a, the head 151-1 may be compressed and deformed by processing, such as by pressing or spinning. In some embodiments, the rivet terminal 151 may be in close contact with the top surface part 111 of the can 110.

That is, the insulator 152 for sealing and electrical insulation may be disposed between the terminal hole 111a and the terminal part 150. The insulator 152 may block (or may prevent) contact between the terminal part 150 and the can 110 to electrically separate the terminal part 150 from the can 110. The insulator 152 may seal the terminal hole 111a in the top surface part 111 of the can 110. The insulator 152 may be made of a resin material, such as polyethylene (PE), polypropylene (PP), polyethylene terephthalate (PET), or the like.

In some embodiments, the insulator 152 may include a first insulator 152a, a second insulator 152b, and a third insulator 152c. The first insulator 152a, the second insulator 152b, and the third insulator 152c may be used (or may be formed or configured) without limitation as long as each of the insulators is made of insulating material.

The first insulator 152a may be disposed between the outer end of the rivet terminal 151 and the top surface part 111. For example, the first insulator 152a may have a hollow disc shape. A diameter of the first insulator 152a may be greater than that of the outer end of the rivet terminal 151. The first insulator 152a may be interposed to block electrical contact at an area where the head 151-1 and the top surface part 111 overlap on the plane. In some embodiments, the first insulator 152a may be disposed between the head 151-1 and the top surface part 111 of the can 110 so as not to overlap the second insulator 152b on the plane.

The second insulator 152b may have a shape that surrounds (e.g., surrounds or extends around a periphery of) the terminal hole 111a in the top surface part 111. For example, the second insulator 152b may be shaped to surround outer and inner surfaces of the top surface part 111 with the terminal hole 111a as a center, and, in a cross-section, defining the terminal hole 111a. The second insulator 152b may extend between the main body 151-2 and the top surface part 111 of the can 110. In some embodiments, an upper end of the second insulator 152b may be in contact with the first insulator 152a. In some embodiments, the second insulator 152b and the first insulator 152a may be disposed between the rivet terminal 151 and the can 110 to electrically insulate the rivet terminal 151 from the can 110 and to seal the rivet terminal 151 and the can 110. In some embodiments, the second insulator 152b and the first insulator 152a may be provided as an integrated insulator 152. The second insulator 152b may be in contact with top and bottom surfaces of the top surface part 111 of the can 110. In some embodiments, the second insulator 152b may be in contact with the third insulator 152c.

The third insulator 152c may have a hollow disk shape and may be disposed between an inner surface of the top surface part 111 and an inner end of the rivet terminal 151. This third insulator 152c may be provided to cover the inner surface of the top surface part 111 of the can 110, and may have a planar size that is greater than that of the first current collector plate 130. The third insulator 152c may be attached to the inner surface of the top surface part 111 by coating or adhering. In some embodiments, the inner surface of the top surface part 111 may be a surface facing a top surface of the electrode assembly 120 and may be the bottom surface of the top surface part 111. The third insulator 152c may prevent the top surface part 111 of the can 110 and the first electrode plate 121 of the electrode assembly 120 from being in contact with each other. As in other embodiments, the third insulator 152c may be provided to cover the inner surfaces of the top surface part 111 and the bent part between the top surface part 111 and the side surface part 112 or may be provided to cover only the inner surface of the top surface part 111.

In some embodiments, the rivet terminal 151 may have a welding groove 151-1a having a certain depth in a direction from the top surface of the head 151-1 toward the main body 151-2. In some embodiments, the welding groove 151-1a may be configured to pass through the center of the head 151-1 in a downward direction from an upper side of the main body 151-2. A height of the welding groove 151-1a may be less than an overall height of the rivet terminal 151. In some embodiments, the rivet terminal 151 may have a welding groove 151-1a, and thus, a lower thickness of the main body 151-2 of the rivet terminal 151 may be reduced. The lower thickness of the main body 151-2 may be defined as a thickness from a lower inner surface of the welding groove 151-1a to a bottom surface of the main body 151-2. The lower thickness of the main body 151-2 may be reduced by the welding groove 151-1a, and thus, the rivet terminal 151 and the first current collector plate 130 may be welded from the outside of the can 110.

For example, the lower portion of the main body 151-2 may have a thickness in a range of 0.5 mm or about 0.5 mm to 1.5 mm or about 1.5 mm. In some embodiments, if the lower thickness of the main body 151-2 is less than about 0.5 mm, the rigidity of the can 110 may not be maintained. In some embodiments, if the lower thickness of the main body 151-2 is greater than 1.5 mm or about 1.5 mm, the welding between the rivet terminal 151 and the first current collector plate 130 at the outside of the can 110 may be relatively difficult.

In some embodiments, an upper inner diameter of the welding groove 151-1a may be greater than a lower inner diameter. In some embodiments, a lower inner diameter of the welding groove 151-1a may be less than a diameter of the terminal hole 111a. For example, the lower inner diameter of the welding groove 151-1a may be in a range of 0.5 mm or about 0.5 mm to 2 mm or about 2 mm. If the lower inner diameter of the welding groove 151-1a is less than 0.5 mm or about 0.5 mm, the welding with the first current collector plate 130 may not be easy due to insufficient welding area. In some embodiments, if the lower inner diameter of the welding groove 151-1a is greater than 2 mm or about 2 mm, the riveting may not be easy due to an increase in size and decrease in rigidity of the rivet terminal 151. In some embodiments, the upper inner diameter of the welding groove 151-1a may be in a range of 2 mm or about 2 mm to 5mm or about 5 mm. If the upper inner diameter of the welding groove 151-1a is less than 2 mm or about 2 mm, it is not easy to secure the welding area and damage to the head 151-1 may occur if welding occurs outside of the welding groove 151-1a. In some embodiments, if the upper inner diameter of the welding groove 151-1a is greater than 5 mm or about 5 mm, the riveting may not be easy due to an increase in size and decrease in rigidity of the rivet terminal 151.

In addition, the rivet terminal 151 may have the welding groove 151-1a, and thus, even if the rivet terminal 151 is welded to the first current collector plate 130 outside the rivet terminal 151, the welding bead may be provided inside the welding groove 151-1a to prevent the bead from protruding from (or protruding above) the rivet terminal 151. In some embodiments, the rivet terminal 151 may be coupled by welding in a state in which the flat bottom surface of the rivet terminal 151 is in contact with the top surface of the first current collector plate 130.

In some embodiments, the rivet terminal 151 may have the welding groove 151-1a to allow welding with the first current collector plate 130 outside the rivet terminal 151, thereby preventing welding foreign substances from being generated inside the can 110 and preventing the electrode assembly 120 from being damaged by welding heat.

In some embodiments, a terminal liquid injection hole (e.g., terminal liquid injection opening) 151-2c through which an electrolyte is injected into the can 110 may be defined in the rivet terminal 151 of the terminal part 150 according to some embodiments. In some embodiments, the terminal liquid injection hole 151-2c may be defined through (e.g., may be formed by or may extend through) the main body 151-2 of the rivet terminal 151. The terminal liquid injection hole 151-2c may be defined to pass (or to extend) from the bottom surface of the welding groove 151-1a to the bottom surface of the main body 151-2. For example, as illustrated in FIG. 3, the terminal liquid injection hole 151-2c may be defined in the center of the bottom surface of the welding groove 151-1a to provide a stepped shape. An inner diameter of the terminal liquid injection hole 151-2c may be less than the lower inner diameter of the welding groove 151-1a. Therefore, in some embodiments, the electrolyte may be injected through the terminal liquid injection hole 151-2c defined in the rivet terminal 151.

A liquid injection hole (e.g., a liquid injection opening) 131 through which the electrolyte is injected may be defined in the first current collector plate 130. The liquid injection hole 131 may be defined to correspond to the position of the terminal liquid injection hole 151-2c in the rivet terminal 151. In some embodiments, the position of the liquid injection hole 131 may be defined to be the same as the position of the terminal liquid injection hole 151-2c. In some embodiments, the inner diameter of the terminal liquid injection hole 151-2c may be the same as the inner diameter of the liquid injection hole 131. However, the present disclosure is not limited thereto, and the inner diameter of the terminal liquid injection hole 151-2c and the inner diameter of the liquid injection hole 131 may be different from each other.

In some embodiments, the first current collector plate 130 may be welded from the outside of the rivet terminal 151 through the welding groove 151-1a in the state in which the top surface of the first current collector plate 130 is in contact with the bottom surface of the main body 151-2, and thus, the welding bead may be disposed on an upper outer circumference of the terminal liquid injection hole 151-2c within the welding groove 151-1a. In some embodiments, the welding bead may be disposed along an upper circumference of the terminal liquid injection hole 151-2c.

As illustrated in FIG. 3, the terminal part 150 may further include a terminal flat part 153 provided on the top surface of the rivet terminal 151. The terminal flat part 153 may be provided to cover the top surface of the rivet terminal 151. The terminal flat part 153 may be provided in a shape corresponding to an upper planar shape of the terminal part 150, and in some embodiments, the terminal flat part 153 may have a circular shape. A planar size of the terminal flat part 153 may be less than or equal to that of the head 151-1 of the rivet terminal 151. In some embodiments, a stepped portion may be disposed along a circumference of an upper edge of the terminal flat part 153. Therefore, in some embodiments, the rivet terminal 151 may be welded at a step formed at the edge of the terminal flat part 153 in the state in which a top surface of the rivet terminal 151 is in contact with a bottom surface of the terminal flat part 153. In some embodiments, a welding area 153a may be provided on the stepped portion disposed along the circumference of the terminal flat part 153 at where the welding bead may be formed. In some embodiments, a diameter of the welding area 153a in the terminal flat part 153 may be less than an outer diameter of the head 151-1 of the rivet terminal 151.

In addition, the terminal flat part 153 have a protrusion 153b protruding in a direction of (e.g., protruding toward) the welding groove 151-1a of the rivet terminal 151 to be coupled to the welding groove 151-1a of the rivet terminal 151. The terminal flat part 153 may be made of the same or similar material as each of the rivet terminal 151 and the first current collector plate 130. The protrusion 153b of the terminal flat part 153 may have a tapered shape such that an outer diameter thereof becomes smaller in a protruding direction. In some embodiments, the protrusion 153b may be provided (or formed) to correspond to the shape of the welding groove 151-1a.

In some embodiments, for example, as illustrated in FIG. 3, the protrusion 153b may fill a partial region of the welding groove 151-1a. In some embodiments, for example, as illustrated in FIG. 4, the protrusion 153b may have the same shape as the welding groove 151-1a and may be coupled to be in close contact with (e.g., may entirely fill) the welding groove 151-1a.

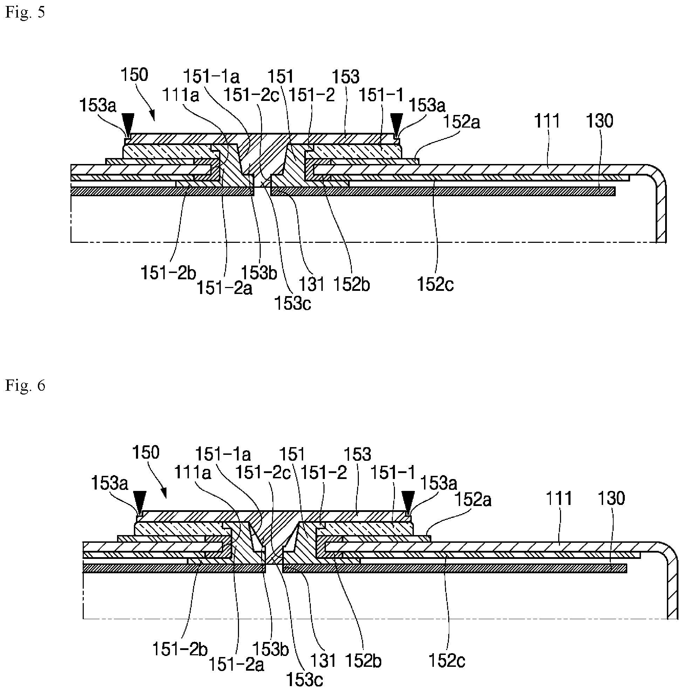

In some embodiments, referring to FIGS. 5 and 6, the protrusion 153b may have an additional protrusion 153c protruding in the direction toward the terminal liquid injection hole 151-2c to be coupled to the terminal liquid injection hole 151-2c. In some embodiments, an outer diameter of the additional protrusion 153c of the terminal flat part 153 may be provided to correspond to the inner diameter of the terminal liquid injection hole 151-2c. In some embodiments, the outer diameter of the additional protrusion 153c may be provided to be the same as the inner diameter of the terminal liquid injection hole 151-2c to be in close contact with (e.g., to entirely fill) and coupled to the terminal liquid injection hole 151-2c.

In some embodiments, for example, as illustrated in FIG. 5, the protrusion 153b may be provided in the same shape as the welding groove 151-1a and may be coupled to be in close contact with the welding groove 151-1a, and in other embodiments, for example, as illustrated in FIG. 6, the protrusion 153b may be provided to only partially fill a region of the welding groove 151-1a. If the terminal flat part 153 includes the protrusions 153b and the additional protrusions 153c, positions of the welding groove 151-1a and the terminal liquid injection hole 151-2c may be better controlled.

In some embodiments, the terminal liquid injection hole 151-2c may be defined in the terminal part 150, the terminal part 150 may be used as a liquid injection port, and the thickness of the terminal part 150 may be adjusted to enable external welding. In some embodiments, a sealing force of the terminal liquid injection hole 151-2c may be improved by additionally disposing the terminal flat part 153 on the upper portion of the rivet terminal 151 of the terminal part 150.

The cap plate 160 may be a circular metal plate and may be coupled to the lower end of the can 110. A bottom surface of the cap plate 160 may be exposed to the outside. The cap plate 160 may be coupled to the lower end of the can 110 in a state in which the gasket 115 is interposed therebetween to prevent electrical connection to the can 110. Because the cap plate 160 is not electrically connected to the positive electrode or the negative electrode of the electrode assembly 120, the cap plate 160 may have no separate electrical polarity (e.g., may be electrically floating).

The cap plate 160 may be fixed in a state in which an edge area of the cap plate 160 is disposed between the beading part 113 and the crimping part 114 of the can 110. In some embodiments, the cap plate 160 may be seated on a lower portion of gasket 115 in a state in which the gasket 115 is disposed on a lower portion of the beading part 113 of the can 110. Thereafter, the crimping part 114 of the can 110 may be bent inwardly toward the cap plate 160 to press the gasket 115 and to couple the cap plate 160 to the can 110. The gasket 115 may be made of a resin material, such as polyethylene (PE), polypropylene (PP), polyethylene terephthalate (PET), or the like. The gasket 115 may press the can 110 and the cap plate 160 to seal a gap between the can 110 and the cap plate 160, thereby preventing the cap plate 160 from being separated from the can 110. The gasket 115 may have an upper portion disposed between the beading part 113 and the cap plate 160 and a lower portion disposed between the crimping part 114 and the cap plate 160. A lower end of the gasket 115 may protrude toward the center of the cap plate 160 compared to (or further than) the crimping part 114.

The cap plate 160 may have a central area 161 corresponding to a lower portion of the second current collector plate 140 and an edge area 162 disposed between the beading part 113 and crimping part 114 of the can 110 and coupled to the can 110. In some embodiments, the central area 161 of the cap plate 160 may be concave toward the inside of the can 110 compared to the edge area 162. In some embodiments, the edge area 162 of the cap plate 160 may protrude outwardly in a direction away from the inside of the can 110 compared to the central area 161. In some embodiments, the cap plate 160 may have a connection area 163 connecting (or extending between) the central area 161 to the edge area 162. The connection area 163 may be inclined due to a stepped portion between the central area 161 and the edge area 162. In some embodiments, a bent part may be provided between the connection area 163 and the central area 161 and between the connection area 163 and the edge area 162.

The cap plate 160 may be provided with a vent 164 configured to open (e.g., to burst) at a reference (or set) pressure in the central area 161. The vent 164 may have a thickness thinner than other areas of the cap plate 160. The vent 164 may be a notch formed upwardly from the bottom surface of the cap plate 160.

If excessive internal pressure occurs (or is generate) inside the can 110 of the secondary battery 100, the vent 164 may be broken (e.g., may burst) to discharge the excessive internal pressure. The vent 164 of the cap plate 160 may be spaced apart from a center thereof and may be provided in a ring shape on the plane. In other embodiments, the vent 164 may have at least one pattern having a straight or curved shape on the plane. A thickness of the vent 164 may be less than that of other areas of the cap plate 160. The vent 164 may have a thickness in a range of 0.05 mm or about 0.05 mm to 0.35 mm or about 0.35 mm. If the thickness of the vent 164 is less than 0.05 mm or about 0.05 mm, deformation or cracks may occur even if the internal pressure of the secondary battery 100 does not increase, and if the thickness exceeds 0.35 mm or about 0.35 mm, the vent 164 may not be broken (e.g., may not burst) and may not operate as the vent 164 even if the internal pressure of the secondary battery 100 increases to the reference pressure.

In the secondary battery, according to various embodiments of the present disclosure, the terminal and the current collector plate may be welded outside the can through the welding groove provided in the lower terminal to prevent welding impurities from being generated inside the case and/or to prevent the electrode assembly from being damaged by the welding heat.

In the secondary battery, according to various embodiments of the present disclosure, because the current collector plate and the terminal are welded inside the welding groove of the terminal, the welding bead may be disposed inside the welding groove to prevent the terminal from protruding due to an external (or protruding) welding bead.

In addition, in the secondary battery, according to various embodiments of the present disclosure, because the terminal liquid injection hole in the terminal passes therethrough so that the electrolyte is injected through the terminal, a squeeze-out phenomenon in which the electrolyte moves and escapes between the gasket and the can due to residual electrolyte in the beading part during the molding may prevented.

In addition, the secondary battery, according to various embodiments of the present disclosure, may have an additional terminal at the upper portion of the terminal to seal the terminal liquid injection hole, and the protrusion may protrude in the direction of the terminal liquid injection hole to control the position of the additional terminal, thereby further improving the sealing force of the terminal liquid injection hole.

The above-described embodiments are merely some embodiments of the secondary battery according to the present disclosure, and thus, the present disclosure is not limited to the foregoing embodiments. It will also be understood by those of ordinary skill in the art that various changes in form and details may be made therein without departing from the scope of the present disclosure as defined by the following claims and their equivalents.

## Claims

1. A secondary battery comprising:
an electrode assembly comprising a first electrode plate, a separator, and a second electrode plate;
a can accommodating the electrode assembly, a lower end of the can being open and being electrical connected to the second electrode plate;
a first current collector plate between a top surface of the electrode assembly and the can and electrically connected to the first electrode plate; and
a terminal part passing through a top surface of the can, a lower end of the terminal part being electrically and mechanically coupled to a top surface of the first current collector plate,
wherein a terminal liquid injection hole through which an electrolyte is injected extends through the terminal part.

2. The secondary battery as claimed in claim 1, wherein the terminal part comprises:
a rivet terminal coupled to the top surface of the can; and
an insulator between the can and the rivet terminal to insulate the can and the rivet terminal from each other.

3. The secondary battery as claimed in claim 2, wherein the can has:
the top surface having a flat plate shape and a terminal hole passing through a central portion thereof; and
a side surface extending downwardly from an edge of the top surface of the can,
wherein the rivet terminal is in the terminal hole.

4. The secondary battery as claimed in claim 3, wherein the rivet terminal comprises:
a head outside the top surface of the can; and
a main body inserted into the terminal hole extending towards an inside of the can.

5. The secondary battery as claimed in claim 4, wherein at least one of:
a planar size of the head is larger than a planar size of the main body;
the main body has: a main body upper portion connected to the head and within the terminal hole in the top surface of the can; and a main body lower portion extending downwardly from the main body upper portion and inside the can,
wherein optionally the main body lower portion has an outer diameter that is greater than an outer diameter of the main body upper portion;
the terminal liquid injection hole is in the main body of the rivet terminal,
wherein optionally: the first current collector plate has an injection hole into which the electrolyte is injected, and
the injection hole in the first current collector plate corresponds to a position of the terminal hole in the rivet terminal,
and wherein further optionally the terminal liquid injection hole has an inner diameter equal to an inner diameter of the injection hole in the first current collector plate.

6. The secondary battery as claimed in claim 4 or 5, wherein the rivet terminal has a welding groove having a depth in a downward direction from a top surface thereof.

7. The secondary battery as claimed in claim 6, wherein at least one of:
the first current collector plate is welded to an outside of the rivet terminal through the welding groove in a state in which the top surface of the first current collector plate is in contact with a bottom surface of the main body so that a welding bead is inside the welding groove;
the welding groove passes through a central portion of the head to extend downwardly from an upper portion of the main body;
the welding groove has an upper inner diameter that is greater than a lower inner diameter thereof.

8. The secondary battery as claimed in claim 6 or 7, wherein the terminal liquid injection hole extends from a bottom surface of the welding groove to a bottom surface of the main body,
and wherein optionally at least one of:
the terminal liquid injection hole has an inner diameter that is less than a lower inner diameter of the welding groove; and
the first current collector plate is welded outside the rivet terminal through the welding groove in a state in which the top surface of the first current collector plate is in contact with the bottom surface of the main body so that a welding bead is in the welding groove.

9. The secondary battery as claimed in claim 6, 7 or 8, wherein the terminal part has a terminal flat part on the top surface of the rivet terminal to cover the top surface of the rivet terminal,
and wherein optionally at least one of:
the terminal flat part has a planar size that is less than a planar size of the head of the rivet terminal;
the terminal flat part has a stepped portion on an upper edge thereof,
and wherein optionally the rivet terminal is welded to the stepped portion on the edge of the terminal flat part in a state in which the top surface of the rivet terminal is in contact with a bottom surface of the terminal flat part so that a welding bead is on the stepped portion along a circumference of the rivet terminal,
and wherein further optionally a welding area of the terminal flat part has a diameter that is less than an outer diameter of the head of the rivet terminal.

10. The secondary battery as claimed in claim 9, wherein the terminal flat part has a protrusion protruding in a direction toward the welding groove in the rivet terminal and is coupled to the welding groove in the rivet terminal.

11. The secondary battery as claimed in claim 10, wherein at least one of:
the protrusion of the terminal flat part has a tapered shape having an outer diameter that gradually decreases in the protruding direction;
the protrusion of the terminal flat part corresponds to a shape of the welding groove;
the protrusion of the terminal flat part partially fills the welding groove;
the protrusion of the terminal flat part has the same shape as the welding groove to be in close contact with the welding groove.

12. The secondary battery as claimed in claim 10 or 11, wherein the protrusion of the terminal flat part comprises an additional protrusion protruding in a direction toward the terminal liquid injection hole and is coupled to the terminal liquid injection hole,
and wherein optionally at least one of:
the additional protrusion of the terminal flat part has an outer diameter corresponding to an inner diameter of the terminal liquid injection hole;
the additional protrusion of the terminal flat part has an outer diameter that is equal to an inner diameter of the terminal liquid injection hole to be in close contact with the terminal liquid injection hole.

13. The secondary battery as claimed in any one of claims 4 to 12, wherein the insulator comprises:
a first insulator between an outer end of the rivet terminal and the top surface of the can;
a second insulator at a side of the terminal hole in the top surface of the can and extending around a periphery of the terminal hole; and
a third insulator between an inner surface of the top surface of the can and an inner end of the rivet terminal,
and wherein optionally at least one of:
an end of the first insulator protrudes beyond the head;
the first insulator has a planar size that is greater than that of the head;
the third insulator has a planar size that is greater than that of the first current collector plate;
the third insulator covers the inner surface of the top surface of the can.

14. The secondary battery as claimed in any preceding claim, wherein a positive electrode non-coating portion that is not coated with a positive electrode active material protrudes upwardly from the first electrode plate, and
wherein a negative electrode non-coating portion that is not coated with a negative electrode active material protrudes downwardly from the second electrode plate,
optionally further comprising a second current collector plate, wherein the can has: the top surface having a flat plate shape and a terminal hole passing through a central portion thereof; and a side surface extending downwardly from an edge of the top surface of the can, and wherein the second current collector plate is adjacent to an end of the side surface and electrically connected to the second electrode plate and the side surface,
and further optionally comprising a cap plate coupled to the side surface to seal a lower end of the can and being insulated from the side surface;
and further optionally the side surface has: a beading part comprising an inwardly concave portion of the side surface; and a crimping part comprising an inwardly bent lower end of the side surface, wherein the cap plate is between the beading part and the crimping part
and further optionally comprising a gasket between the cap plate and the side surface,
and further optionally wherein the second current collector plate is between the beading part and the gasket and in contact with the beading part.

15. The secondary battery as claimed in any one of claims 9 to 14, wherein the rivet terminal, the first current collector plate, and the terminal flat part are made of the same material.
